# EUROPEAN PATENT SPECIFICATION

(11) **EP 4 331 709 B1**
(45) Date of publication and mention of the grant of the patent: **12.11.2025**
(21) Application number: 22832602.1
(22) Date of filing: 28.04.2022
(51) Int. Cl.: B63B 17/00, B01D 53/56, B01D 53/94, B63H 21/32, B63H 21/38, F01N 3/08, F01N 3/20, F01N 3/24, F02M 21/02

(54) **SHIP**
SCHIFF
NAVIRE

(30) Priority: 30.06.2021 JP 2021108730
(43) Date of publication of application: 06.03.2024
(73) Proprietor: Mitsubishi Shipbuilding Co., Ltd., Yokohama-shi Kanagawa 220-8401 (JP)
(72) Inventor: YAMADA Daisuke, Yokohama-shi, Kanagawa 220-8401 (JP); UNSEKI Takashi, Yokohama-shi, Kanagawa 220-8401 (JP)
(74) Representative: Studio Torta S.p.A.
(86) International application number: PCT/JP2022/019316
(87) International publication number: WO 2023/276442

(56) References cited:
- EP-A1- 2 751 404
- EP-B1- 2 751 404
- CN-A- 111 332 441
- CN-A- 111 332 446
- CN-A- 111 392 019
- CN-A- 111 392 019
- US-A1- 2015 260 070
- US-B1- 8 240 277
- US-B2- 9 803 529
- ANONYMOUS: "Inertgas - Wikipedia", 1 January 2000 (2000-01-01), XP093210406, Retrieved from the Internet <URL:https://batavia.internal.epo.org/citenpl/citation/prod/pdf/b97ae1b9-c27e-3aa1-82e0-085933f80765.pdf> [retrieved on 20241001]

## Description

### Technical Field

The present disclosure relates to a ship.

The present application claims priority based on Japanese Patent Application No. 2021-108730 filed in Japan on June 30, 2021.

### Background Art

In a ship using ammonia as a main fuel, it is necessary to treat exhaust gas generated due to the combustion of ammonia with a denitration apparatus (SCR) in order to suppress the discharge of nitrogen oxides. The exhaust gas treated by this denitration apparatus is discharged into the atmosphere through, for example, a chimney.

PTL 1 discloses a ship that uses an ammonia generator to generate ammonia as a reducing agent used in a denitration apparatus.

On the other hand, in the above-described ship, fuel of a main engine, which is combustion equipment, may be switched from ammonia to another fuel such as heavy oil. When the fuel of the main engine is switched from ammonia to another fuel, for the purpose of removing ammonia fuel from inside a pipe, for example, it is necessary to purge ammonia that remains unburned in the combustion equipment with inert gas or the like.

PTL 2 discloses a ship in which combustible gas remaining inside a pipe of a gas engine driven by the combustible gas is purged with inert gas and the combustible gas is discharged into the atmosphere via a vent post.

### Citation List

### Patent Literature

[PTL 1] Japanese Unexamined Patent Application Publication No. 2012-47094
[PTL 2] Japanese Unexamined Patent Application Publication No. 2013-11332

### Summary of Invention

[PTL 3] CN111392019a
[PTL 4] EP2751404a1
[PTL 5] US2015260070
[PTL 6] xp093210406

### Technical Problem

Since the ship described in PTL 1 requires the ammonia generator for generating the reducing agent, it is necessary to ensure a space inside the hull for installing the ammonia generator.

Further, since the ammonia purged with the inert gas as in PTL 2 cannot be discharged into the atmosphere as it is, it is necessary to detoxify (remove) with an ammonia removal device. However, for example, when a large amount of ammonia remains in the combustion equipment, a large amount of ammonia must be removed, and a large ammonia removal device is required, and then there is a problem in that the size of a hull is increased.

The present disclosure is made to solve the above-described problems, and an object of the present disclosure is to provide a ship where an increase in the size of a hull is suppressed.

### Solution to Problem

In order to solve the above problems, a ship according to the present disclosure is defined by claim 1.

### Advantageous Effects of Invention

According to the present disclosure, it is possible to provide a ship where an increase in the size of a hull is suppressed.

### Brief Description of Drawings

Fig. 1 is a side view of a ship according to an embodiment of the present disclosure.
Fig. 2 is a diagram showing a system for introducing ammonia into a denitration apparatus according to the embodiment of the present disclosure.
Fig. 3 is a diagram showing a system for introducing ammonia into a denitration apparatus according to another embodiment of the present disclosure.
Fig. 4 is a diagram showing a system for introducing ammonia into a denitration apparatus according to still another embodiment of the present disclosure.

### Description of Embodiments

Hereinafter, a ship according to each embodiment of the present disclosure will be described with reference to the drawings.

### (Configuration of Ship)

The ship in the present embodiment is a ship that uses ammonia as fuel. A ship type of the ship is not limited to a specific type. Examples of the ship type of the ship include a liquefied gas carrier, a ferry, a RO-RO ship, a vehicle carrier, a passenger ship, and the like.

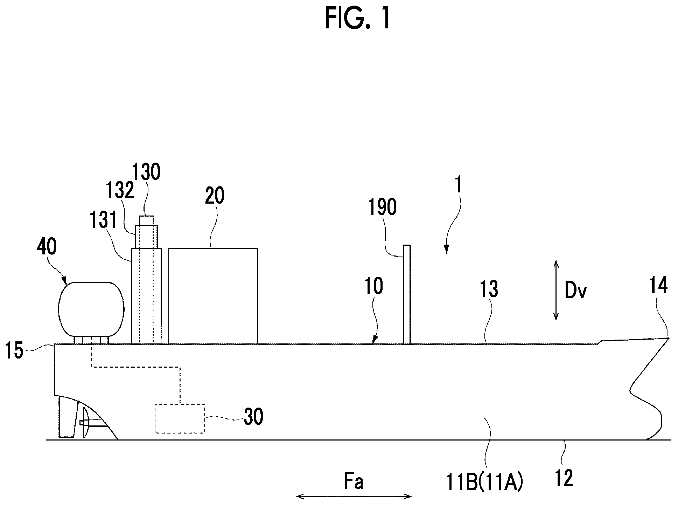

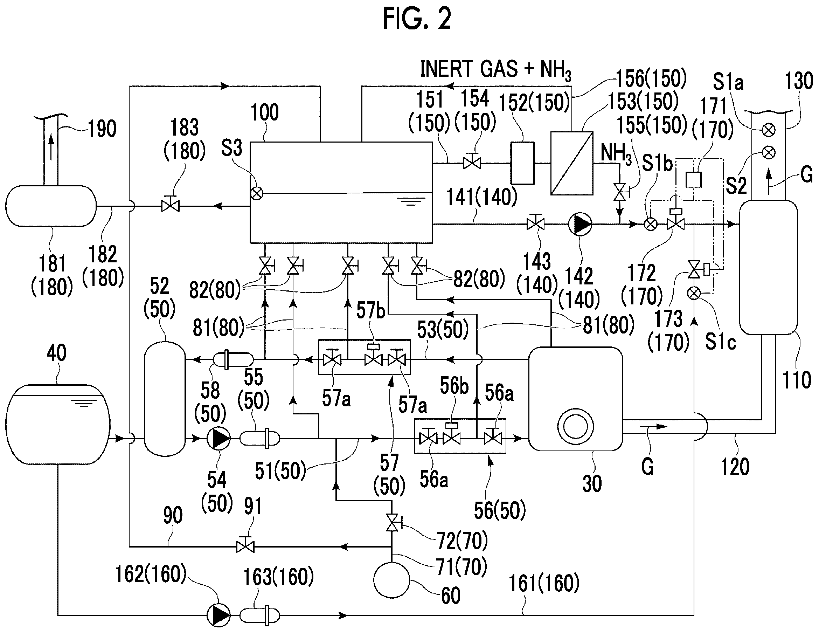

As shown in Figs. 1 and 2, The ship 1 includes a hull 10, a superstructure 20, combustion equipment 30, a fuel ammonia tank 40, a fuel supply system 50, an ammonia recovery tank 100, an inert gas supply device 60, an inert gas supply system 70, a purge system 80, an ammonia purge line 90, a denitration apparatus 110, an exhaust gas duct 120, a flue gas duct 130, an ammonia introduction system 140, an ammonia separation system 150, a reducing agent supply system 160, a mixer 170, an ammonia removal system 180, and a vent post 190.

### (Hull)

As shown in Fig. 1, the hull 10 includes ship sides 11A and 11B, a ship bottom 12, and an upper deck 13. The ship sides 11A and 11B include a pair of ship side plates respectively forming the left and right ship sides 11A and 11B. The ship bottom 12 includes a double-bottomed ship bottom plate that connects the ship sides 11A and 11B. The upper deck 13 is provided over upper side end portions of the pair of plates of the ship sides 11A and 11B in a vertical direction Dv.

Due to the ship sides 11A and 11B, the ship bottom 12, and the upper deck 13, an outer shell of the hull 10 has a box shape in a cross-sectional view orthogonal to a bow-stern direction Fa. The bow-stern direction Fa in the present embodiment is a direction extending from a stern 15 to a bow 14 of the hull 10.

### (Superstructure)

The superstructure 20 is a structure that is provided to face an upper side in the vertical direction Dv from the upper deck 13. An accommodation space and the like are provided inside the superstructure 20, for example.

### (Combustion Equipment)

The combustion equipment 30 is equipment that generates thermal energy by burning fuel. The combustion equipment 30 is provided, for example, in a partition such as an engine room (not shown) provided inside the hull 10. Examples of the combustion equipment 30 can include a main engine for propelling the ship 1, a generator that supplies electricity to the inside of the ship, a boiler that generates steam as working fluid, and the like. The combustion equipment 30 in the present embodiment is a main engine that uses ammonia (hereinafter, referred to as fuel ammonia) as fuel.

The combustion equipment 30 is provided with an output monitoring device (not shown) that periodically acquires load information of the combustion equipment 30 at predetermined time intervals. The load information in the present embodiment is information that represents, for example, a rotation speed of the combustion equipment 30 or the magnitude of an output of the combustion equipment 30 such as an engine output (horsepower) (how much load is applied to the combustion equipment 30). The output monitoring device acquires the load information of the combustion equipment 30 and performs transmission with a valve control device (a supply amount control device 171 described later) provided outside the combustion equipment 30 by wire or wirelessly. Examples of the output monitoring device include a measuring machine such as a horsepower meter (a shaft horsepower meter for a ship).

### (Fuel Ammonia Tank)

The fuel ammonia tank 40 is a tank that internally stores liquefied ammonia as fuel ammonia for the combustion equipment 30. The fuel ammonia tank 40 in the present embodiment is provided on the upper deck 13 on the stern 15 side of the superstructure 20 in the bow-stern direction Fa.

### (Fuel Supply System)

The fuel supply system 50 is a system that supplies liquid fuel ammonia from the fuel ammonia tank 40 to the combustion equipment 30. For example, the fuel supply system 50 in the present embodiment is provided inside the hull 10.

As shown in Fig. 2, the fuel supply system 50 includes a fuel supply line 51, a mix tank 52, a return line 53, a first pump 54, a first heat exchanger 55, a first fuel pressure adjusting device 56, a second fuel pressure adjusting device 57, and a second heat exchanger 58.

The fuel supply line 51 is a pipe that connects the fuel ammonia tank 40 and the combustion equipment 30. In the fuel supply line 51, the liquid fuel ammonia flows from the fuel ammonia tank 40 toward the combustion equipment 30. Therefore, the fuel ammonia is introduced from the fuel ammonia tank 40 into the combustion equipment 30 via the fuel supply line 51.

The mix tank 52 is a tank that recovers the fuel ammonia, which has returned without being supplied to the inside of the combustion equipment 30, that is, which has not been used for combustion, from the combustion equipment 30 and that supplies the recovered ammonia into the fuel supply line 51 again as fuel ammonia. The mix tank 52 is provided in the fuel supply line 51. The mix tank 52 is not limited to the tank and may be, for example, a pipe.

The return line 53 is a pipe that connects the combustion equipment 30 and the mix tank 52. In the return line 53, liquid ammonia that remains unburned inside the combustion equipment 30 flows from the combustion equipment 30 toward the mix tank 52. Therefore, the ammonia, which is sent to the mix tank 52 by the return line 53, becomes fuel ammonia used in the combustion equipment 30 again by being re-supplied into the fuel supply line 51 inside the mix tank 52.

The first pump 54 is a pump that pumps the fuel ammonia from the fuel ammonia tank 40 to the combustion equipment 30. The first pump 54 is provided in the fuel supply line 51 closer to the combustion equipment 30 side than the mix tank 52.

The first heat exchanger 55 is a heat exchanger that heats the fuel ammonia flowing inside the fuel supply line 51. The first heat exchanger 55 is provided in the fuel supply line 51 closer to the combustion equipment 30 side than the first pump 54. For example, steam generated in an auxiliary boiler or the like (not shown) provided inside the hull 10 or heated liquid is introduced into the first heat exchanger 55 (hereinafter, the steam or the liquid is referred to as a heating source.

By exchanging heat between the heating source and the fuel ammonia inside the first heat exchanger 55, the fuel ammonia is heated to a temperature suitable for combustion.

The first fuel pressure adjusting device 56 is a device that adjusts an inflow pressure of the fuel ammonia flowing inside the fuel supply line 51 into the combustion equipment 30. The first fuel pressure adjusting device 56 is provided in the fuel supply line 51 closer to the combustion equipment 30 side than the first heat exchanger 55.

The first fuel pressure adjusting device 56 includes, for example, a shut valve 56a and a first control valve 56b. Two shut valves 56a in the present embodiment are provided on the fuel supply line 51 in a state of being separated from each other. The shut valve 56a is normally in an open state and becomes a closed state at predetermined time. When the shut valve 56a is in a closed state, the fuel ammonia inside the fuel ammonia tank 40 cannot flow inside the fuel supply line 51 toward the combustion equipment 30.

The first control valve 56b is an automatically operated valve provided in the fuel supply line 51 between the two shut valves 56a. The first control valve 56b adjusts the pressure of the fuel ammonia flowing through the fuel supply line 51 according to an opening degree of the valve. The opening degree of the first control valve 56b is preferably controlled by, for example, inputting a control signal, which indicates the opening degree transmitted from a control device or the like (not shown) that is provided outside the first fuel pressure adjusting device 56 and that controls the first control valve 56b, into the first control valve 56b.

The second fuel pressure adjusting device 57 is a device that adjusts an inflow pressure of ammonia flowing through the return line 53 into the mix tank 52. The second fuel pressure adjusting device 57 is provided in the return line 53.

The second fuel pressure adjusting device 57 includes, for example, a shut valve 57a and a second control valve 57b. Two shut valves 57a are provided on the return line 53 in a state of being separated from each other. The shut valve 57a is normally in an open state and becomes a closed state at predetermined time. When the shut valve 57a is in a closed state, the ammonia inside the combustion equipment 30 cannot flow inside the return line 53 toward the mix tank 52.

The second control valve 57b is an automatically operated valve provided in the return line 53 between the two shut valves 57a. The second control valve 57b adjusts the pressure of the ammonia flowing inside the return line 53 according to an opening degree of the valve. The opening degree of the second control valve 57b is preferably controlled by, for example, inputting a control signal, which indicates the opening degree transmitted from a control device or the like (not shown) that is provided outside the second fuel pressure adjusting device 57 and that controls the second control valve 57b, into the first control valve 56b.

As the time at which the shut valves 56a and 57a are in a closed state, for example, a case can be exemplified where the fuel ammonia present between the shut valves 56a and 57a is taken out and recovered when the fuel that is used by the combustion equipment 30 as the main engine is switched from ammonia to heavy oil or the like.

The second heat exchanger 58 is a heat exchanger that heats the ammonia flowing inside the return line 53 by using the above-described heating source. The second heat exchanger 58 is provided in the return line 53 closer to the mix tank 52 side than the second fuel pressure adjusting device 57. When ammonia flowing inside the return line 53 on an upstream side of the second heat exchanger 58 has a higher temperature than that of the heating source, the ammonia is cooled inside the second heat exchanger 58.

### (Ammonia Recovery Tank)

The ammonia recovery tank 100 is a tank into which ammonia remaining inside the fuel supply line 51, inside the combustion equipment 30, and inside the return line 53 is introduced and is a tank as an ammonia recovery portion that stores this ammonia inside. For example, the ammonia recovery tank 100 in the present embodiment is provided inside the hull 10.

A level sensor S3 is provided in the ammonia recovery tank 100. The level sensor S3 is a water level gauge that measures a stored amount of liquid ammonia that is stored inside the ammonia recovery tank 100. The level sensor S3 in the present embodiment transmits a measurement result of the stored amount of the ammonia inside the ammonia recovery tank 100 to a control device or the like (not shown) provided outside the ammonia recovery tank 100 wirelessly or by wire.

### (Inert Gas Supply Device)

The inert gas supply device 60 is a device that generates and pumps inert gas for purging that is nonreactive with ammonia. Examples of the inert gas include gas such as nitrogen gas (N₂). The inert gas supply device 60 in the present embodiment is provided inside the hull 10, for example.

### (Inert Gas Supply System)

The inert gas supply system 70 is a system that sends the inert gas generated by the inert gas supply device 60 to the fuel supply system 50 and the combustion equipment 30 and that purges ammonia present in the fuel supply system 50 and the combustion equipment 30. The inert gas supply system 70 in the present embodiment is provided inside the hull 10, for example. The inert gas supply system 70 includes a first purge line 71 and a first purge valve 72.

The first purge line 71 is a pipe through which the inert gas generated by the inert gas supply device 60 flows. One end of the first purge line 71 is connected to the inert gas supply device 60. The other end of the first purge line 71 is connected to the fuel supply line 51 between the first heat exchanger 55 and the first fuel pressure adjusting device 56.

The inert gas, which is pumped from the inert gas supply device 60 via the first purge line 71, flows into the fuel supply line 51, and then is pumped to the combustion equipment 30 and the return line 53 in this order. As a result, the inert gas pushes out (purges) the ammonia that is present inside the fuel supply line 51, inside the combustion equipment 30, and inside the return line 53.

The first purge valve 72 is an automatically operated valve provided in the first purge line 71. The first purge valve 72 is normally in a closed state and becomes an open state at predetermined time. When the first purge valve 72 is in an open state, the inert gas can flow inside the first purge line 71 from the inert gas supply device 60 toward the fuel supply line 51. The automatically operated valve in the present embodiment includes an electromagnetic valve, a valve driven by an electric motor, and the like.

### (Purge System)

The purge system 80 is a system that takes out ammonia remaining inside the fuel supply line 51, inside the combustion equipment 30, and inside the return line 53 to the ammonia recovery tank 100. For example, the purge system 80 in the present embodiment is provided inside the hull 10. The purge system 80 includes a plurality of second purge lines 81 and a plurality of second purge valves 82.

The plurality of second purge lines 81 are pipes respectively connecting the fuel supply line 51 and the ammonia recovery tank 100, the combustion equipment 30 and the ammonia recovery tank 100, and the return line 53 and the ammonia recovery tank 100. By purging ammonia, which is present inside the fuel supply line 51, inside the combustion equipment 30, and inside the return line 53, with the inert gas, the ammonia flows through the second purge line 81 together with the inert gas.

In the present embodiment, as an example, five second purge lines 81 respectively connect the fuel supply line 51 and the ammonia recovery tank 100, the combustion equipment 30 and the ammonia recovery tank 100, and the return line 53 and the ammonia recovery tank 100.

One ends of the plurality of second purge lines 81 are respectively connected to the combustion equipment 30, the fuel supply line 51 between the two shut valves 56a of the first fuel pressure adjusting device 56, the return line 53 between the two shut valves 57a of the second fuel pressure adjusting device 57, the fuel supply line 51 between the first fuel pressure adjusting device 56 and the first heat exchanger 55, and the return line 53 between the second fuel pressure adjusting device 57 and the mix tank 52. The other ends of the plurality of second purge lines 81 are respectively connected to the ammonia recovery tank 100.

Each of the plurality of second purge valves 82 is an automatically operated valve that is provided in each of the plurality of second purge lines 81. The second purge valve 82 is normally in a closed state and becomes an open state together with the first purge valve 72. Therefore, when the first purge valve 72 and the second purge valve 82 are in an open state, the inert gas flows through the first purge line 71 and flows inside the fuel supply line 51, inside the combustion equipment 30, and inside the return line 53.

When the inert gas flows inside the fuel supply line 51, inside the combustion equipment 30, and inside the return line 53, the ammonia purged by the inert gas flows toward the ammonia recovery tank 100 via each second purge line 81. That is, the ammonia remaining inside the fuel supply line 51, inside the combustion equipment 30, and inside the return line 53 is replaced (purged) with the inert gas.

### (Ammonia Purge Line)

The ammonia purge line 90 is a pipe through which inert gas for purging ammonia inside the ammonia recovery tank 100 flows. One end of the ammonia purge line 90 is connected to the first purge line 71 closer to the inert gas supply device 60 side than the first purge valve 72. The other end of the ammonia purge line 90 is connected to the ammonia recovery tank 100. That is, the ammonia purge line 90 is branched from the first purge line 71 to connect the inert gas supply device 60 and the ammonia recovery tank 100.

The ammonia purge line 90 is provided with a third purge valve 91. The third purge valve 91 is an automatically operated valve. The third purge valve 91 is normally in a closed state and becomes an open state at predetermined time. When the third purge valve 91 is in an open state, the inert gas is introduced inside the ammonia purge line 90 via the first purge line 71, and then the inert gas is pumped to the ammonia recovery tank 100.

As the time at which the third purge valve 91 is in an open state, for example, a case can be exemplified where the first purge valve 72 is in a closed state, and it is necessary to purge the ammonia inside the ammonia recovery tank 100.

### (Denitration Apparatus)

The denitration apparatus 110 is an apparatus in which exhaust gas G generated by combustion of the ammonia in the combustion equipment 30 is introduced, and a denitration treatment is performed on the exhaust gas G. The denitration apparatus 110 decomposes nitrogen oxide (NOₓ) contained in the exhaust gas G into nitrogen (N₂) and water (H₂O) by using a denitration catalyst or the like.

The denitration apparatus 110 in the present embodiment is a selective catalytic reduction (SCR) denitration apparatus. The denitration apparatus 110 is provided inside the hull 10, for example. The denitration apparatus 110 lowers a concentration of the nitrogen oxide of the exhaust gas G introduced from the combustion equipment 30 to a level at which the nitrogen oxide can be discharged into the atmosphere.

### (Exhaust Gas Duct)

The exhaust gas duct 120 is a duct that forms a flue gas duct inside for guiding the exhaust gas G generated in the combustion equipment 30 to the denitration apparatus 110. One end of the exhaust gas duct 120 is connected to the combustion equipment 30. The other end of the exhaust gas duct 120 is connected to the denitration apparatus 110. Therefore, the exhaust gas G generated due to the combustion of the fuel ammonia inside the combustion equipment 30 is introduced from the combustion equipment 30 to the denitration apparatus 110 via the exhaust gas duct 120.

### (Flue Gas Duct)

The flue gas duct 130 is an exhaust gas duct that discharges the exhaust gas G, in which the denitration treatment is performed by the denitration apparatus 110, into the atmosphere. The flue gas duct 130 in the present embodiment is connected to the denitration apparatus 110, penetrates the upper deck 13, and extends on an upper side of the outside of the hull 10 in the vertical direction Dv. As shown in Fig. 1, a portion of the flue gas duct 130 extending to the outside of the hull 10 is surrounded by a hull structure 131 and a funnel 132.

An ammonia sensor S1 and a nitrogen oxide sensor S2 are provided inside the flue gas duct 130. Hereinafter, the ammonia sensor S1 provided inside the flue gas duct 130 is referred to as a first ammonia sensor S1a.

The first ammonia sensor S1a is a sensor that measures a concentration of the ammonia contained in the exhaust gas G flowing upward inside the flue gas duct 130. The first ammonia sensor S1a in the present embodiment transmits a measurement result of the concentration of the ammonia contained in the exhaust gas G flowing inside the flue gas duct 130 to a control device or the like (not shown) wirelessly or by wire.

The nitrogen oxide sensor S2 is a sensor that measures a concentration of the nitrogen oxide of the exhaust gas G flowing upward inside the flue gas duct 130. The nitrogen oxide sensor S2 in the present embodiment transmits a measurement result of the concentration of the nitrogen oxide of the exhaust gas G flowing inside the flue gas duct 130 to a control device or the like (not shown) wirelessly or by wire.

### (Ammonia Introduction System)

The ammonia introduction system 140 is a system that introduces ammonia from the ammonia recovery tank 100 to the denitration apparatus 110. The ammonia introduction system 140 in the present embodiment is provided inside the hull 10, for example. The ammonia introduction system 140 includes an ammonia introduction line 141, a second pump 142, and an ammonia introduction valve 143.

The ammonia introduction line 141 is a pipe that connects the ammonia recovery tank 100 and the denitration apparatus 110. Inside the ammonia introduction line 141, the ammonia inside the ammonia recovery tank 100 flows toward the denitration apparatus 110.

The ammonia that is introduced into the denitration apparatus 110 via the ammonia introduction line 141 is utilized as a reducing agent for the denitration catalyst inside the denitration apparatus 110. That is, the ammonia introduction line 141 connects the ammonia recovery tank 100 and the denitration apparatus 110 and introduces the ammonia inside the ammonia recovery tank 100 into the denitration apparatus 110 as a reducing agent.

The ammonia sensor S1 is provided inside the ammonia introduction line 141. Hereinafter, the ammonia sensor S1 provided in the ammonia introduction line 141 is referred to as a second ammonia sensor S1b. The second ammonia sensor S1b is a sensor that measures a concentration and a flow rate of ammonia flowing inside the ammonia introduction line 141.

The second ammonia sensor S1b in the present embodiment measures the concentration and the flow rate of the ammonia flowing inside the ammonia introduction line 141 at predetermined time intervals and transmits a measurement result to a valve control device (a supply amount control device 171 described later) provided outside the ammonia introduction line 141.

The second pump 142 is a pump that pumps liquid ammonia stored inside the ammonia recovery tank 100 from the ammonia recovery tank 100 to the denitration apparatus 110. The second pump 142 is provided in the ammonia introduction line 141 between a position where the second ammonia sensor S1b inside the ammonia introduction line 141 is provided and the ammonia recovery tank 100.

When an internal pressure of the ammonia recovery tank 100 is sufficiently high, the ammonia introduction system 140 may not include the second pump 142. That is, in a state in which the pressure inside the ammonia recovery tank 100 is high, the liquid ammonia inside the ammonia recovery tank 100 is pushed out into the ammonia introduction line 141 due to a pressure difference. As a result, the liquid ammonia can flow from the ammonia recovery tank 100 toward the denitration apparatus 110 inside the ammonia introduction line 141.

The ammonia introduction valve 143 is an automatically operated valve provided in the ammonia introduction line 141 between the second pump 142 and the ammonia recovery tank 100. The ammonia introduction valve 143 is normally in an open state and becomes a closed state at predetermined time. When the ammonia introduction valve 143 is in a closed state, the ammonia cannot flow inside the ammonia introduction line 141 from the ammonia recovery tank 100 toward the denitration apparatus 110.

Specifically, the ammonia introduction valve 143 becomes a closed state, for example, in a case where the ammonia flowing from the ammonia recovery tank 100 to the ammonia introduction line 141 transitions from a liquid state to a gaseous state. When a state of the ammonia transitions from liquid to gas, inert gas is mixed in the ammonia introduced from the ammonia recovery tank 100 to the ammonia introduction line 141.

The ammonia introduction valve 143 may be determined to be in an open state or a closed state based on a measurement result of the level sensor S3 provided inside the ammonia recovery tank 100. Specifically, a control device or the like that receives the measurement result of the level sensor S3 may determine the open or closed state to be set for the ammonia introduction valve 143 by comparing the measurement result with a threshold value related to a predetermined water level.

### (Ammonia Separation System)

The ammonia separation system 150 is a system that separates ammonia from mixed gas in which inert gas from a gas phase portion of the ammonia recovery tank 100 and ammonia gas are mixed. The ammonia separation system 150 in the present embodiment is provided inside the hull 10, for example. The ammonia separation system 150 includes a gas line 151, a gas pumper 152, a separation device 153, a gas line inlet valve 154, a gas line outlet valve 155, and a return line 156.

The gas line 151 is a pipe for introducing the mixed gas in which the inert gas from the gas phase portion of the ammonia recovery tank 100 and the ammonia gas are mixed. One end of the gas line 151 is connected to the ammonia recovery tank 100. The other end of the gas line 151 is connected to the ammonia introduction line 141 between the ammonia introduction valve 143 and the position where the second ammonia sensor S1b inside the ammonia introduction line 141 is provided.

The gas pumper 152 is a blower that is provided in the gas line 151 and that causes gas to flow inside the gas line 151.

The separation device 153 is a device that separates ammonia from gas flowing through the gas line 151 and sends the ammonia to the denitration apparatus 110. The separation device 153 in the present embodiment includes a separation film or the like that separates ammonia from gas. The separation device 153 is provided in the gas line 151 on a downstream side of the gas pumper 152.

The separation device 153 separates the gas sent by the gas pumper 152 into ammonia (NH₃ shown in Fig. 2) and inert gas (inert gas + NH₃ shown in Fig. 2) in which part of unseparated ammonia is mixed.

The separation device 153 sends only the separated ammonia to the downstream side of the gas line 151. Therefore, the ammonia, which is separated from the gas by the separation device 153, is introduced in the ammonia introduction line 141 and flows toward the denitration apparatus 110 as a reducing agent for the denitration catalyst.

The gas line inlet valve 154 is an automatically operated valve provided in the gas line 151 on an upstream side of the gas pumper 152. The gas line outlet valve 155 is an automatically operated valve provided in the gas line 151 on a downstream side of the separation device 153.

The gas line inlet valve 154 and the gas line outlet valve 155 are normally in a closed state and become an open state at predetermined time. The gas line inlet valve 154 and the gas line outlet valve 155 are controlled to be in an open state when the ammonia introduction valve 143 is in a closed state and the gas remains in the ammonia recovery tank 100, for example.

The return line 156 is a pipe that connects the separation device 153 and the ammonia recovery tank 100. Between the ammonia that is separated from the gas by the separation device 153 and the inert gas in which part of the ammonia that has not been separated from the gas is mixed, the latter inert gas in which part of the ammonia is mixed flows through the return line 156. Therefore, the inert gas in which part of the ammonia separated by the separation device 153 is mixed is returned from the separation device 153 to the ammonia recovery tank 100 via the return line 156.

### (Reducing Agent Supply System)

The reducing agent supply system 160 is a system that supplies fuel ammonia from the fuel ammonia tank 40 to the denitration apparatus 110 without passing through the ammonia recovery tank 100. The reducing agent supply system 160 includes a reducing agent supply line 161, a third pump 162, and a third heat exchanger 163.

The reducing agent supply line 161 is a pipe that supplies the fuel ammonia from the fuel ammonia tank 40 to the ammonia introduction line 141. One end of the reducing agent supply line 161 is connected to the fuel ammonia tank 40, and the other end is connected to the ammonia introduction line 141 between the position where the second ammonia sensor S1b inside the ammonia introduction line 141 is provided and the denitration apparatus 110.

In the reducing agent supply line 161, the fuel ammonia inside the fuel ammonia tank 40 flows toward the ammonia introduction line 141. The fuel ammonia introduced into the ammonia introduction line 141 is supplied to the denitration apparatus 110. Therefore, the fuel ammonia that is introduced into the denitration apparatus 110 via the reducing agent supply line 161 and the ammonia introduction line 141 is utilized as a reducing agent for the denitration catalyst inside the denitration apparatus 110. Therefore, the reducing agent supply line 161 supplies the fuel ammonia of the fuel ammonia tank 40 to the denitration apparatus 110 as a reducing agent.

The ammonia sensor S1 is provided inside the reducing agent supply line 161. Hereinafter, the ammonia sensor S1 provided in the reducing agent supply line 161 is referred to as a third ammonia sensor S1c. The third ammonia sensor S1c is a sensor that measures a concentration and a flow rate of ammonia flowing inside the reducing agent supply line 161. The third ammonia sensor S1c in the present embodiment measures the concentration and the flow rate of the ammonia flowing inside the reducing agent supply line 161 at predetermined time intervals and transmits a measurement result to the valve control device (the supply amount control device 171 described later) provided outside the reducing agent supply line 161.

The third pump 162 is a pump that pumps the fuel ammonia flowing inside the reducing agent supply line 161 from the fuel ammonia tank 40 to the ammonia introduction line 141. The third pump 162 is provided in the reducing agent supply line 161.

The third heat exchanger 163 is a heat exchanger that heats the fuel ammonia flowing through the reducing agent supply line 161. The third heat exchanger 163 is provided in the reducing agent supply line 161 closer to the ammonia introduction line 141 side than a position of the reducing agent supply line 161 where the third pump 162 is provided.

For example, the heating source is introduced into the third heat exchanger 163. The fuel ammonia is heated to a temperature suitable for the reducing agent of the denitration apparatus 110 by exchanging heat between this steam and the fuel ammonia in the third heat exchanger 163.

### (Mixer)

The mixer 170 is a device that adjusts an amount of the ammonia introduced from the ammonia introduction line 141 and the reducing agent supply line 161 into the denitration apparatus 110 based on the concentration of the ammonia inside the ammonia introduction line 141 and the reducing agent supply line 161, the flow rate of the ammonia, and the load information of the combustion equipment 30. The mixer 170 in the present embodiment is provided inside the hull 10, for example. The mixer 170 includes a supply amount control device 171, a third control valve 172, and a fourth control valve 173.

The supply amount control device 171 is a valve control device that controls the amount of the ammonia supplied to the denitration apparatus 110 based on the concentration and the flow rate of the ammonia flowing through the ammonia introduction line 141, the concentration and the flow rate of the fuel ammonia flowing through the reducing agent supply line 161, and the load information of the combustion equipment 30.

The supply amount control device 171 acquires the measurement results of the second ammonia sensor S1b and the third ammonia sensor S1c, and acquires the load information of the combustion equipment 30 transmitted from the output monitoring device. The supply amount control device 171 adjusts the amount of the ammonia introduced from the ammonia introduction line 141 into the denitration apparatus 110 and the amount of the ammonia introduced from the reducing agent supply line 161 into the ammonia introduction line 141 based on these measurement results and the load information.

The third control valve 172 is an automatically operated valve provided in the ammonia introduction line 141 between a position where the ammonia sensor S1b is provided in the ammonia introduction line 141 and a position where the reducing agent supply line 161 and the ammonia introduction line 141 are connected to each other. The third control valve 172 adjusts an inflow amount of the ammonia flowing inside the ammonia introduction line 141 to the denitration apparatus 110 according to an opening degree of the valve.

The opening degree of the third control valve 172 is controlled by inputting a control signal, which indicates the opening degree determined by the supply amount control device 171 based on the measurement results of the second ammonia sensor S1b and the third ammonia sensor S1c and the load information of the combustion equipment 30 transmitted from the output monitoring device, into the third control valve 172.

The fourth control valve 173 is an automatically operated valve provided in the reducing agent supply line 161 on a downstream side of the third heat exchanger 163. The fourth control valve 173 adjusts an inflow amount of the fuel ammonia flowing inside the reducing agent supply line 161 to the ammonia introduction line 141 according to an opening degree of the valve.

The opening degree of the fourth control valve 173 is controlled by inputting a control signal, which indicates the opening degree determined by the supply amount control device 171 based on the measurement results of the second ammonia sensor S1b and the third ammonia sensor S1c and the load information of the combustion equipment 30 transmitted from the output monitoring device, into the fourth control valve 173.

### (Ammonia Removal System)

The ammonia removal system 180 is a system that detoxifies (removes) the ammonia inside the ammonia recovery tank 100. The ammonia removal system 180 in the present embodiment is provided inside the hull 10, for example. The ammonia removal system 180 includes an ammonia removal device 181, an ammonia removal line 182, and a removal device valve 183.

The ammonia removal device 181 is a device that removes the ammonia introduced from the ammonia recovery tank 100. The ammonia removal device 181 in the present embodiment is a scrubber. The ammonia removal device 181 is not limited to a scrubber and may be a combustion type gas treatment device or the like. The ammonia removal device 181 lowers the concentration of the ammonia introduced from the ammonia recovery tank 100 to a level at which the ammonia can be discharged into the atmosphere.

The ammonia removal line 182 is a pipe that connects the ammonia recovery tank 100 and the ammonia removal device 181. In the ammonia removal line 182, the ammonia inside the ammonia recovery tank 100 flows toward the ammonia removal device 181. That is, the ammonia inside the ammonia recovery tank 100 is introduced into the ammonia removal device 181 via the ammonia removal line 182.

The removal device valve 183 is an automatically operated valve provided in the ammonia removal line 182. The removal device valve 183 is normally in a closed state and becomes an open state at predetermined time. When the removal device valve 183 is in an open state, ammonia can flow inside the ammonia removal line 182 from the ammonia recovery tank 100 toward the ammonia removal device 181, and the ammonia inside the ammonia recovery tank 100 is removed by the ammonia removal device 181.

### (Vent Post)

The vent post 190 is a pipe that discharges the ammonia removed by the ammonia removal device 181 into the atmosphere. The vent post 190 in the present embodiment is connected to the ammonia removal device 181, penetrates the upper deck 13, and extends on the upper side of the outside of the hull 10 in the vertical direction Dv.

### (Effects of Action)

According to a configuration of the ship 1 of the embodiment, at least the ammonia remaining inside the combustion equipment 30 is introduced into the ammonia recovery tank 100 together with the inert gas pumped by the inert gas supply device 60. The ammonia introduced into the ammonia recovery tank 100 is introduced into the denitration apparatus 110 via the ammonia introduction line 141 and is utilized as a reducing agent for the denitration apparatus 110. As a result, for example, in a case where the fuel used in the combustion equipment 30 is switched from ammonia to another fuel, even when a large amount of ammonia remaining inside the combustion equipment 30 is recovered, the ammonia can be removed while being effectively used in the denitration apparatus 110. That is, since it is not necessary to remove the entire amount of ammonia recovered from the combustion equipment 30 with the ammonia removal device 181 or the like and discharge the ammonia into the atmosphere, a large ammonia removal device 181 is not required. Therefore, it is possible to suppress an increase in the size of the hull 10.

Further, for example, by using the existing ammonia removal device 181 in combination with the above configuration, it is possible to shorten time required for removing the recovered ammonia.

Further, according to the configuration of the ship 1 of the embodiment, the separation device 153 separates the ammonia from the gas sent from the ammonia recovery tank 100 and sends the ammonia to the denitration apparatus 110. As a result, for example, even when the liquid ammonia that can flow from the ammonia recovery tank 100 to the ammonia introduction line 141 runs out, only the ammonia can be sent to the denitration apparatus 110 by the separation device 153. Therefore, since only ammonia can always be introduced into the denitration apparatus 110, it is possible to suppress a decrease in reduction efficiency in the denitration apparatus 110.

Further, according to the configuration of the ship 1 of the embodiment, by introducing the fuel ammonia inside the fuel ammonia tank 40 to the denitration apparatus 110 via the reducing agent supply line 161, the fuel ammonia can also be utilized for the denitration apparatus 110 as a reducing agent. As a result, for example, even when the ammonia that can flow from the ammonia recovery tank 100 to the ammonia introduction line 141 runs out, the fuel ammonia can be supplied to the denitration apparatus 110 as a reducing agent. Therefore, since ammonia as a reducing agent can be introduced into the denitration apparatus 110 at any time, the reducing agent does not run short in the denitration apparatus 110.

Further, according to the configuration of the ship 1 of the embodiment, the mixer 170 adjusts the amount of ammonia introduced into the denitration apparatus 110 based on the concentration of the ammonia inside the ammonia introduction line 141 and inside the reducing agent supply line 161. As a result, the ammonia introduced into the denitration apparatus 110 can be adjusted to an appropriate amount. Therefore, the reduction efficiency of the denitration apparatus 110 can be stabilized.

Further, according to the configuration of the ship 1 of the embodiment, the inert gas can be supplied to the ammonia recovery tank 100 via the ammonia purge line 90. As a result, for example, even when the combustion equipment 30 is in operation, the inert gas can be sent to the ammonia recovery tank 100 via the ammonia purge line 90. Therefore, since all the ammonia inside the ammonia recovery tank 100 can be introduced into the denitration apparatus 110 via the ammonia introduction line 141, it is not necessary to utilize the ammonia removal device 181.

### [Other Embodiments]

Hitherto, the embodiments of the present disclosure have been described in detail with reference to the drawings. However, specific configurations are not limited to the configurations of the embodiments, and additions, omissions, and substitutions of configurations and other modifications can be made within the scope not departing from the concept of the present disclosure. Further, the present disclosure is not limited by the embodiments, and is limited only by the claims.

Further, although one ends of the plurality of second purge lines 81 described in the embodiment are respectively connected to the fuel supply line 51, the combustion equipment 30, and the return line 53, the configuration is not limited to this configuration. The number of the second purge lines 81 may be an appropriate number, and one end of the second purge line 81 may be connected to an appropriate location. That is, the number of the second purge lines 81 is not limited to five.

Further, the supply amount control device 171 of the mixer 170 described in the embodiment may control the opening degrees of the third control valve 172 and the fourth control valve 173 based on the measurement result of the first ammonia sensor S1a provided inside the flue gas duct 130. As a result, for example, even when a malfunction or the like occurs in the second ammonia sensor S1b or the third ammonia sensor S1c and an abnormality is caused in the measurement results of these, the amount of ammonia introduced into the denitration apparatus 110 can be stabilized based also on the measurement result of the first ammonia sensor S1a.

Further, the mixer 170 described in the embodiment may be configured to adjust the amount of ammonia to be introduced into the denitration apparatus 110 based on at least one of the concentration and the flow rate of the ammonia, and the load information of the combustion equipment 30. Therefore, the ammonia sensor S1b and the ammonia sensor S1c may be configured to measure only one of the concentration and flow rate of the ammonia.

Further, when the ammonia sensor S1b and the ammonia sensor S1c measure only the flow rate of the ammonia, the supply amount control device 171 may control the opening degrees of the third control valve 172 and the fourth control valve 173 based also on the measurement results of the first ammonia sensor S1a and the nitrogen oxide sensor S2.

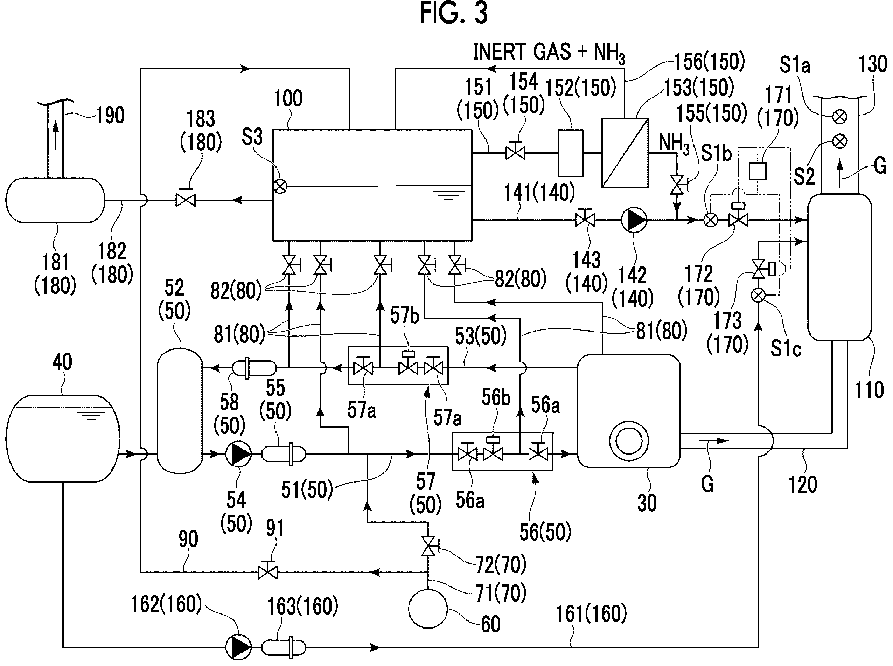

Further, as shown in Fig. 3, the ammonia in the ammonia introduction line 141 and the reducing agent supply line 161 may be configured to be separately supplied to the denitration apparatus 110. As a result, liquid or gaseous ammonia can be supplied from the ammonia introduction line 141, and liquid fuel ammonia can be supplied from the reducing agent supply line 161. Therefore, for example, when the ammonia supplied from the ammonia introduction line 141 is gaseous, this ammonia is mixed with the liquid ammonia supplied from the reducing agent supply line 161 by the mixer 170, so that the ammonia does not become a gas-liquid mixture.

Further, the first heat exchanger 55, the second heat exchanger 58, and the third heat exchanger 163 described in the embodiment are not limited to a configuration of a heat exchanger that utilizes the above heating source as a heating medium, and for example, may be heating devices capable of applying thermal energy such as electric heaters.

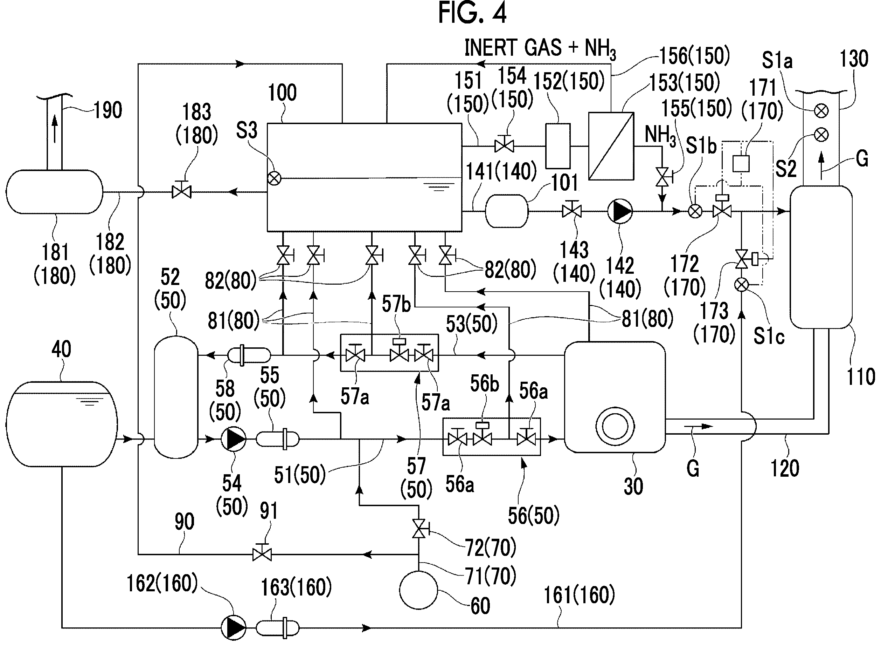

Further, as shown in Fig. 4, the ship 1 described in the embodiment may further include an ammonia transfer tank 101. The ammonia transfer tank 101 is a tank that is provided in the ammonia introduction line 141 between the ammonia recovery tank 100 and the ammonia introduction valve 143 and that is capable of storing ammonia inside. As a result, the ammonia inside the ammonia recovery tank 100 can be transferred to the ammonia transfer tank 101, and a state in which there is no liquid ammonia inside the ammonia recovery tank 100 can be achieved. That is, for example, when the fuel used by the combustion equipment 30 is switched from ammonia to another fuel such as heavy oil, and then switched from another fuel to ammonia again, the ammonia inside the ammonia recovery tank 100 can be temporarily stored or transferred to the ammonia transfer tank 101 in advance. Therefore, another fuel can be recovered inside the empty ammonia recovery tank 100, and an operation related to fuel switching can be smoothly performed.

### [Appendix]

The ship described in the embodiment is understood as follows, for example.

(1) A ship 1 according to a first aspect includes: a hull 10; a fuel ammonia tank 40 that is provided in the hull 10 and that stores fuel ammonia; a fuel supply line 51 that is connected to the fuel ammonia tank 40; combustion equipment 30 into which the fuel ammonia is introduced from the fuel ammonia tank 40 via the fuel supply line 51; an inert gas supply device 60 that pumps inert gas into at least the combustion equipment 30 via the fuel supply line 51; an ammonia recovery tank 100 into which ammonia remaining in the combustion equipment 30 is introduced together with the inert gas that has been pumped into the combustion equipment 30; a denitration apparatus 110 into which exhaust gas G that is generated by combustion of the fuel ammonia in the combustion equipment 30 is introduced; and an ammonia introduction line 141 that connects the ammonia recovery tank 100 and the denitration apparatus 110 and that introduces, as a reducing agent, the ammonia inside the ammonia recovery tank 100 into the denitration apparatus 110.

According to the above configuration, for example, in a case where the fuel used in the combustion equipment 30 is switched from ammonia to another fuel, even when a large amount of ammonia remaining inside at least the combustion equipment 30 is recovered, the ammonia can be removed while being effectively utilized in the denitration apparatus 110. Further, for example, by using the existing ammonia removal device 181 in combination with the above configuration, it is possible to shorten time required for removing the recovered ammonia.

(2) The ship 1 of a second aspect according to the ship 1 of (1) may further include: a gas line 151 that introduces gas inside the ammonia recovery tank 100 into the ammonia introduction line 141; and a separation device 153 that separates the ammonia from the gas flowing through the gas line 151 and that sends the ammonia to the denitration apparatus 110.

According to the above configuration, for example, even when the liquid ammonia that can flow from the ammonia recovery tank 100 to the ammonia introduction line runs out, the gaseous ammonia can flow into the gas line 151 together with the inert gas. Only the ammonia can be sent to the denitration apparatus 110 by the separation device 153.

(3) The ship 1 of a third aspect according to the ship 1 of (1) or (2) may further include a reducing agent supply line 161 that supplies, as a reducing agent, the fuel ammonia inside the fuel ammonia tank 40 to the denitration apparatus 110.

According to the above configuration, the fuel ammonia inside the fuel ammonia tank 40 can also be utilized as a reducing agent for the denitration apparatus 110. Therefore, for example, even when the ammonia that can flow from the ammonia recovery tank 100 to the ammonia introduction line 141 runs out, the fuel ammonia can be supplied to the denitration apparatus 110 as a reducing agent.

(4) The ship 1 of a fourth aspect according to the ship 1 of (3) may further include: an ammonia sensor S1 that measures at least one of a concentration and a flow rate of the ammonia inside the ammonia introduction line 141 and inside the reducing agent supply line 161; and a mixer 170 that adjusts an amount of the ammonia introduced into the denitration apparatus 110 from the ammonia introduction line 141 and the reducing agent supply line 161, based on at least one of the concentration or the flow rate of the ammonia and load information of the combustion equipment.

According to the above configuration, the amount of ammonia introduced into the denitration apparatus 110 can be adjusted to an appropriate amount.

(5) The ship 1 of a fifth aspect according to the ship 1 of any one of (1) to (4) may include an ammonia purge line 90 that connects the inert gas supply device 60 and the ammonia recovery tank 100 and through which the inert gas flows.

According to the above configuration, for example, even when the combustion equipment 30 is in operation, the inert gas can be sent to the ammonia recovery tank 100 via the ammonia purge line 90. Therefore, since all the ammonia inside the ammonia recovery tank 100 can be introduced into the denitration apparatus 110 via the ammonia introduction line 141, it is not necessary to utilize the ammonia removal device 181.

### Industrial Applicability

According to a ship of the present disclosure, an increase in the size of a hull can be suppressed. Reference Signs List

- 1: ship
- 10: hull
- 11A, 11B: ship side
- 12: ship bottom
- 13: upper deck
- 14: bow
- 15: stern
- 20: superstructure
- 30: combustion equipment
- 40: fuel ammonia tank
- 50: fuel supply system
- 51: fuel supply line
- 52: mix tank
- 53: return line
- 54: first pump
- 55: first heat exchanger
- 56: first fuel pressure adjusting device
- 56a, 57a: shut valve
- 56b: first control valve
- 57: second fuel pressure adjusting device
- 57b: second control valve
- 58: second heat exchanger
- 60: inert gas supply device
- 70: inert gas supply system
- 71: first purge line
- 72: first purge valve
- 80: purge system
- 81: second purge line
- 82: second purge valve
- 90: ammonia purge line
- 91: third purge valve
- 100: ammonia recovery tank
- 101: ammonia transfer tank
- 110: denitration apparatus
- 120: exhaust gas duct
- 130: flue gas duct
- 131: hull structure
- 132: funnel
- 140: ammonia introduction system
- 141: ammonia introduction line
- 142: second pump
- 143: ammonia introduction valve
- 150: ammonia separation system
- 151: gas line
- 152: gas pumper
- 153: separation device
- 154: gas line inlet valve
- 155: gas line outlet valve
- 156: return line
- 160: reducing agent supply system
- 161: reducing agent supply line
- 162: third pump
- 163: third heat exchanger
- 170: mixer
- 171: supply amount control device
- 172: third control valve
- 173: fourth control valve
- 180: ammonia removal system
- 181: ammonia removal device
- 182: ammonia removal line
- 183: removal device valve
- 190: vent post
- Dv: vertical direction
- Fa: bow-stern direction
- G: exhaust gas
- S1: ammonia sensor
- S1a: first ammonia sensor
- S1b: second ammonia sensor
- S1c: third ammonia sensor
- S2: nitrogen oxide sensor
- S3: level sensor

## Claims

1. A ship (1) comprising:
a hull (10);
a fuel ammonia tank (40) that is provided in the hull (10) and that stores fuel ammonia;
a fuel supply line (51) that is connected to the fuel ammonia tank (40);
combustion equipment (30) which is operated by introducing the fuel ammonia introduced from the fuel ammonia tank (40) via the fuel supply line (15) as fuel;
an inert gas supply device (60) that pumps inert gas into at least the combustion equipment (30) via the fuel supply line (15);
an ammonia recovery tank (100) into which ammonia remaining in the combustion equipment (30) is introduced together with the inert gas that has been pumped into the combustion equipment (30);
a denitration apparatus (110) into which exhaust gas that is generated by combustion of the fuel ammonia in the combustion equipment (30) is introduced; and
an ammonia introduction line (141) that connects the ammonia recovery tank (100) and the denitration apparatus (110) and that introduces, as a reducing agent, the ammonia inside the ammonia recovery tank (100) into the denitration apparatus (110), wherein
the combustion equipment (30) can also be operated with other fuels different from the fuel ammonia, **characterized in that**
the inert gas, which is pumped from the inert gas supply device (60), flows into the fuel supply line (51), and then is pumped to the combustion equipment (30) and a return line (53) in this order.

2. The ship according to Claim 1, further comprising:
a gas line (151) that introduces gas inside the ammonia recovery tank (100) into the ammonia introduction line; and
a separation device (153) that separates the ammonia from the gas flowing through the gas line (151) and that sends the ammonia to the denitration apparatus (110).

3. The ship (1) according to Claim 1 or 2, further comprising:
a reducing agent supply line (161) that supplies, as a reducing agent, the fuel ammonia inside the fuel ammonia tank (40) to the denitration apparatus (110).

4. The ship (1) according to Claim 3, further comprising:
an ammonia sensor (S1) that measures at least one of a concentration and a flow rate of the ammonia inside the ammonia introduction line (141) and inside the reducing agent supply line (161); and
a mixer (170) that adjusts an amount of the ammonia introduced into the denitration apparatus (110) from the ammonia introduction line (141) and the reducing agent supply line (161), based on at least one of the concentration and the flow rate of the ammonia, and load information of the combustion equipment.

5. The ship (1) according to Claim 1 or 2, further comprising:
an ammonia purge line (90) that connects the inert gas supply device (60) and the ammonia recovery tank (100) and through which the inert gas flows.

## Patentansprüche

1. Schiff (1), das aufweist:
einen Rumpf (10);
einen in dem Rumpf (10) bereitgestellten Ammoniakkraftstofftank (40), der Ammoniakkraftstoff lagert;
eine Kraftstoffversorgungsleitung (51), die mit dem Ammoniakkraftstofftank (40) verbunden ist;
eine Verbrennungsanlage (30), die betrieben wird, indem der von dem Ammoniakkraftstofftank (40) über die Brennstoffversorgungsleitung (15) eingeleitete Ammoniakbrennstoff als Brennstoff eingeleitet wird;
eine Inertgasversorgungsvorrichtung (60), die über die Brennstoffversorgungsleitung Inertgas wenigstens in die Verbrennungsanlage (30) pumpt,
einen Ammoniakrückgewinnungstank (100), in den in der Verbrennungsanlage (30) verbleibender Ammoniak zusammen mit dem in die Verbrennungsanlage (30) gepumptem Inertgas eingeleitet wird;
eine Denitrierungsvorrichtung (110), in die Abgas eingeleitet wird, das durch Verbrennung des Ammoniakbrennstoffs in der Verbrennungsanlage (30) erzeugt wird; und
eine Ammoniakeinleitungsleitung (141), welche den Ammoniakrückgewinnungstank (100) und die Denitrierungsvorrichtung (110) verbindet und die das Ammoniak im Inneren des Rückgewinnungstanks (100) als ein Reduktionsmittel in die Denitrierungsvorrichtung (110) einleitet, wobei
die Verbrennungsanlage (30) auch mit anderen von Ammoniakbrennstoff verschiedenen Brennstoffen betrieben werden kann, **dadurch gekennzeichnet, dass**
das Inertgas, das aus der Inertgasversorgungsvorrichtung (60) gepumpt wird, in die Brennstoffversorgungsleitung (51) strömt und dann in dieser Reihenfolge zu der Verbrennungsanlage (30) und einer Rückführungsleitung (53) gepumpt wird.

2. Schiff nach Anspruch 1, das ferner aufweist:
eine Gasleitung (151), die Gas im Inneren des Ammoniakrückgewinnungstanks (100) in die Ammoniakeinleitungsleitung (141) einleitet; und
eine Abscheidevorrichtung (153), die das Ammoniak von dem durch die Gasleitung (151) strömenden Gas abscheidet und die das Ammoniak zu der Denitrierungsvorrichtung (110) leitet.

3. Schiff (1) nach Anspruch 1 oder 2, das ferner aufweist:
eine Reduktionsmittelversorgungsleitung (161), die den Ammoniakbrennstoff im Inneren des Ammoniakkraftstofftanks (40) als ein Reduktionsmittel an die Denitrierungsvorrichtung (110) liefert.

4. Schiff (1) nach Anspruch 3, das ferner aufweist:
einen Ammoniaksensor (S1), der eine Konzentration und/oder einen Durchsatz des Ammoniaks im Inneren der Ammoniakeinleitungsleitung (141) und im Inneren der Reduktionsmittelversorgungsleitung (161) misst; und
einen Mischer (170), der eine Menge des Ammoniaks, die von der Ammoniakeinleitungsleitung (141) und der Reduktionsmittelversorgungsleitung (161) in die Denitrierungsvorrichtung (110) eingeleitet wird, basierend auf der Konzentration und/oder dem Durchsatz des Ammoniaks und Füllinformationen der Verbrennungsanlage (30) einstellt.

5. Schiff (1) nach Anspruch 1 oder 2, das ferner aufweist:
eine Ammoniakspülleitung (90), welche die Inertgasversorgungsvorrichtung (60) und den Ammoniakrückgewinnungstank (100) verbindet und durch welche das Inertgas strömt.

## Revendications

1. Navire (1) comprenant :
une coque (10) ;
un réservoir d'ammoniac combustible (40) qui est prévu dans la coque (10) et qui stocke l'ammoniac combustible ;
une conduite d'alimentation en combustible (51) qui est raccordée au réservoir d'ammoniac combustible (40) ;
l'équipement de combustion (30) qui est actionné en introduisant l'ammoniac combustible introduit à partir du réservoir d'ammoniac combustible (40) via la conduite d'alimentation en combustible (15) en tant que combustible ;
un dispositif d'alimentation en gaz inerte (60) qui pompe le gaz inerte au moins dans l'équipement de combustion (30) via la conduite d'alimentation en combustible (15) ;
un réservoir de récupération d'ammoniac (100) dans lequel l'ammoniac restant dans l'équipement de combustion (30) est introduit conjointement avec le gaz inerte qui a été pompé dans l'équipement de combustion (30) ;
un appareil de dénitration (110) dans lequel est introduit le gaz d'échappement qui est généré par la combustion de l'ammoniac combustible dans l'équipement de combustion (30) ; et
une conduite d'introduction d'ammoniac (141) qui raccorde le réservoir de récupération d'ammoniac (100) et l'appareil de dénitration (110) et qui introduit, en tant qu'agent de réduction, l'ammoniac à l'intérieur du réservoir de récupération d'ammoniac (100) dans l'appareil de dénitration (110), dans lequel :
l'équipement de combustion (30) peut également être actionné avec d'autres combustibles différents de l'ammoniac combustible, **caractérisé en ce que** :
le gaz inerte, qui est pompé à partir du dispositif d'alimentation en gaz inerte (60), s'écoule dans la conduite d'alimentation en combustible (51), et est ensuite pompé vers l'équipement de combustion (30) et une conduite de retour (53), dans cet ordre.

2. Navire selon la revendication 1, comprenant en outre :
une conduite de gaz (151) qui introduit le gaz à l'intérieur du réservoir de récupération d'ammoniac (100) dans la conduite d'introduction d'ammoniac ; et
un dispositif de séparation (153) qui sépare l'ammoniac du gaz s'écoulant par la conduite de gaz (151) et qui envoie l'ammoniac vers l'appareil de dénitration (110) .

3. Navire (1) selon la revendication 1 ou 2, comprenant en outre :
une conduite d'alimentation en agent de réduction (161) qui alimente, en tant qu'agent de réduction, l'ammoniac combustible à l'intérieur du réservoir d'ammoniac combustible (40), à l'appareil de dénitration (110) .

4. Navire (1) selon la revendication 3, comprenant en outre :
un capteur d'ammoniac (S1) qui mesure au moins l'un parmi une concentration et un débit de l'ammoniac à l'intérieur de la conduite d'introduction d'ammoniac (141) et à l'intérieur de la conduite d'alimentation en agent de réduction (161) ; et
un mélangeur (170) qui règle une quantité d'ammoniac introduit dans l'appareil de dénitration (110) à partir de la conduite d'introduction d'ammoniac (141) et de la conduite d'alimentation en agent de réduction (161), sur la base d'au moins l'un parmi la concentration et le débit de l'ammoniac, et l'information de charge de l'équipement de combustion.

5. Navire (1) selon la revendication 1 ou 2, comprenant en outre :
une conduite de purge d'ammoniac (90) qui raccorde le dispositif d'alimentation en gaz inerte (60) et le réservoir de récupération d'ammoniac (100) et à travers laquelle le gaz inerte s'écoule.
